# FASCICULE DE BREVET EUROPEEN

(11) **EP 1 212 733 B1**
(45) Date de publication et mention de la délivrance du brevet: **13.02.2013**
(21) Numéro de dépôt: 00929749.0
(22) Date de dépôt: 24.03.2000
(51) Int. Cl.: G07F 11/38, A47F 1/12

(54) **DISPOSITIF POUR EXTRAIRE AUTOMATIQUEMENT ET DE MANIERE SEQUENTIELLE DES OBJETS STOCKES EN RANGEES DANS DES RAYONNAGES**
VORRICHTUNG ZUR AUTOMATISCHEN SEQUENTIELLEN ENTNAHME VON IN REIHEN AUF REGALEN GESPEICHERTEN OBJEKTEN
DEVICE FOR AUTOMATIC SEQUENTIAL EXTRACTION OF OBJECTS STORED IN ROWS ON SHELVES

(30) Priorité: 26.03.1999 FR 9903824
(43) Date de publication de la demande: 12.06.2002
(73) Titulaire: HKI Electronic Components Ltd., Kowloon, Hong Kong (CN)
(72) Inventeur: SHEK, Simon K. T., Sai Kung, New Territories, Hong Kong (CN); POUX, Emmanuel, F-14700 Noron L'Abbaye (FR)
(74) Mandataire: Zimmermann, Alain
(86) Numéro de dépôt international: PCT/IB2000/000777
(87) Numéro de publication internationale: WO 2000/058189

(56) Documents cités:
- EP-A- 0 101 025
- FR-A- 2 228 010
- JP-A- 9 007 825
- US-A- 3 132 732
- US-A- 3 687 337
- US-A- 3 737 071
- US-A- 5 029 618

## Description

La présente invention concerne un dispositif pour extraire automatiquement et de manière séquentielle des objets stockés en rangées dans des rayonnages, le premier objet de chaque rangée étant maintenu en appui contre une butée.

De tels dispositifs sont notamment utilisés dans les officines de pharmacie pour assurer une distribution commode et rapide des médicaments. A cet effet, on connaît des systèmes pneumatiques ou à moteur, mais qui ne donnent pas entière satisfaction en raison de leur complexité et de leur coût.

La présente invention à donc pour but principal de remédier à ces inconvénients et, pour ce faire, elle a pour objet un dispositif du type susmentionné qui se caractérise essentiellement en ce qu'il comprend au moins un électroaimant dont l'armature mobile vient frapper l'objet en butée à travers une fente afin de le faire passer par-dessus la butée.

Dans une forme de réalisation particulière de l'invention, l'électroaimant comporte une culasse constituée par un noyau ferromagnétique supportant un bobinage et pourvu à chacune de ses extrémités d'un flasque, tandis que l'armature mobile comporte, à l'une de ses extrémités, des ergots venant s'emboîter librement avec un certain jeu dans des ouvertures correspondantes de l'un des flasques, et à son autre extrémité, une partie recourbée s'étendant au-delà de l'autre flasque et qui, lorsque l'armature mobile est attirée par la culasse sous l'effet du courant circulant dans le bobinage, vient faire saillie à travers ladite fente pour frapper l'objet à extraire.

On obtient ainsi un dispositif d'extraction particulièrement simple et peu coûteux, tout en étant d'une grande efficacité.

De préférence, le noyau de la culasse et l'armature mobile sont constitués par des plaques rectangulaires, ce qui permet d'obtenir une structure de faible épaisseur.

Selon une disposition avantageuse de l'invention, en l'absence de courant dans le bobinage, l'armature mobile est maintenue en position d'effacement sous l'effet de la simple gravité.

De préférence également, l'électroaimant est logé dans un support en forme de rail réalisé en un matériau amagnétique et constituant la butée pour le premier objet de chaque rangée.

Il est ainsi possible d'adapter très facilement la position des électroaimants aux emplacements des objets à extraire dans les rayonnages.

Avantageusement, la partie recourbée de l'armature mobile comporte un évidement, ce qui permet de l'alléger et donc d'améliorer l'énergie cinétique sans diminuer l'intensité du champ magnétique.

Le cas échéant, l'armature mobile pourra comporter, au niveau de l'évidement, une plaque métallique dirigée vers la culasse et réduisant l'écartement avec celle-ci, ce qui permet d'accroître encore la force de frappe.

Par ailleurs, le bobinage de l'électroaimant est alimenté avec un courant modulable en intensité, ce qui permet d'adapter la force de frappe de l'armature mobile à la nature de l'objet à extraire.

Le cas échéant, l'extrémité recourbée de l'armature mobile est munie d'un amortisseur en caoutchouc, et un second amortisseur est prévu sur l'armature mobile, au niveau de l'autre flasque, permettant ainsi d'insonoriser totalement l'extraction des objets.

Dans une variante de réalisation de l'invention, une plaque pivotante est disposée au niveau de la fente, entre l'objet à extraire et la partie recourbée de l'armature mobile, ce qui permet d'extraire plus facilement des objets ayant des formes non régulières.

Plusieurs formes d'exécution de l'invention sont décrites ci-après à titre d'exemples, en référence aux dessins annexés dans desquels :
- la figure 1 est un schéma de principe illustrant le fonctionnement du dispositif d'extraction conforme à l'invention ;
- la figure 2 est une vue en perspective de la culasse de l'électroaimant utilisé dans ce dispositif d'extraction ;
- la figure 3 est une vue en perspective de la culasse avec son bobinage ;
- la figure 4 est une vue en perspective de l'armature mobile ;
- la figure 5 est une vue en perspective du rail dans lequel vient se loger l'électroaimant ; et
- les figures 6 et 7 sont des schémas illustrant une variante de réalisation de l'invention.

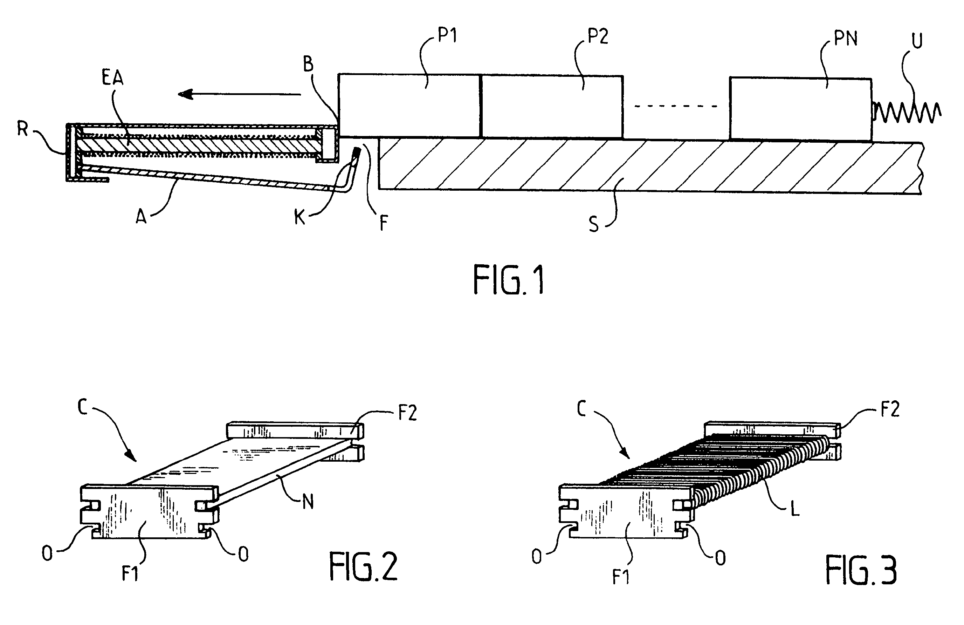

Le dispositif d'extraction représenté schématiquement sur la figure 1 est conçu pour extraire automatiquement et de manière séquentielle des objets P1, P2...PN, stockés par rangées dans des rayonnages sur un support tel que S.

Dans une application particulière de l'invention, ces objets peuvent par exemple être constitués par les différents produits pharmaceutiques d'une officine.

Le premier objet P1 de chaque rangée est maintenu en appui contre une butée B, soit par la force d'un ressort U, soit encore par simple gravité. Dans ce dernier cas, le support S sera constitué par une rampe inclinée dans un ou plusieurs plans.

Conformément à l'invention, le dispositif comprend, pour chaque rangée d'objets, un électroaimant EA dont l'armature mobile A vient frapper le premier objet P1 de la rangée à travers une fente F ménagée entre le support S et la butée B afin de le faire passer par-dessus ladite butée. L'objet P1 se trouve ainsi éjecté sur un moyen d'acheminement non représenté, constitué par exemple par une bande transporteuse, pour être amené automatiquement au niveau de la caisse de l'officine, tandis que l'objet P2 vient prendre sa place contre la butée B sous l'action du ressort U.

Comme on peut le voir plus clairement sur les figures 2 à 4, l'électroaimant EA comporte tout d'abord une culasse C constituée par un noyau ferromagnétique N en forme de plaque rectangulaire, pourvu à chacune de ses extrémités d'un flasque, respectivement F1 et F2. De préférence, le noyau N est emboîté à force et sans jeu dans les flasques F1 et F2 afin de réduire les coûts de fabrication. Sur le noyau N est enroulé un bobinage L susceptible d'être alimenté en courant par des moyens appropriés.

Quant à l'armature mobile A, elle est également constituée par une plaque de forme rectangulaire et comporte à l'une de ses extrémités deux ergots E venant s'emboîter librement avec un certain jeu dans des ouvertures O en forme d'encoches, prévues sur le flasque F1, de manière à former une espèce de charnière. L'autre extrémité de l'armature mobile A est constituée par une partie recourbée K s'étendant au-delà du flasque F2 et qui, lorsque l'armature est attirée par la culasse C sous l'effet du courant circulant dans le bobinage L, vient faire saillie à travers la fente F pour frapper l'objet P1 à extraire qui se trouve ainsi éjecté par-dessus la butée B vers le moyen d'acheminement. En l'absence de courant dans le bobinage L, l'armature mobile A est maintenue dans sa position d'effacement, comme représenté sur la figure 1, sous l'effet de la simple gravité, grâce à la charnière formée par les ergots E et les ouvertures O.

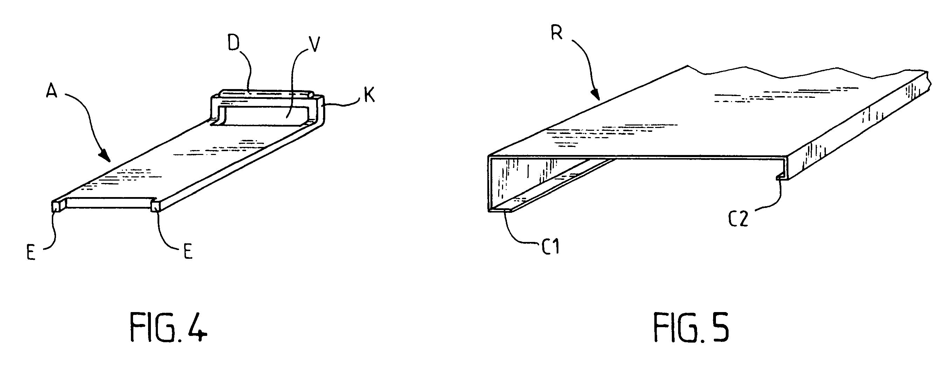

La structure ainsi obtenue est de faible épaisseur et peut aisément venir se loger dans un support en forme de rail R, comme celui représenté sur la figure 5, réalisé en un matériau amagnétique et comportant des cornières C1 et C2 adaptées aux dimensions des flasques F1 et F2 de l'électroaimant. Il est ainsi possible d'ajuster très facilement la position des électroaimants le long du rail en fonction des emplacements des objets stockés à extraire des rayonnages, l'indépendance de fonctionnement des différents électroaimants étant assurée par le caractère amagnétique du rail. De plus, l'encombrement vertical réduit du rail permet d'en superposer un grand nombre sur un même meuble. On notera en outre que dans cette disposition, la butée B est formée directement par le rail.

De préférence, l'armature mobile A est allégée au niveau de la partie recourbée K, grâce à un évidement V, mais reste pleine entre les flasques F1 et F2, ce qui permet d'améliorer l'énergie cinétique sans modifier le champ magnétique.

On peut également, de manière connue en soi, alimenter le bobinage L avec un courant modulable en intensité, afin d'adapter la force de frappe de l'armature mobile A à la nature de l'objet à extraire, en particulier son poids et sa fragilité éventuelle.

Enfin, on pourra prévoir, le cas échéant, deux petits amortisseurs adhésifs en caoutchouc D sur l'armature mobile A, l'un au niveau du flasque F2 et l'autre à l'extrémité de la partie recourbée K afin d'insonoriser au maximum les opérations d'extraction.

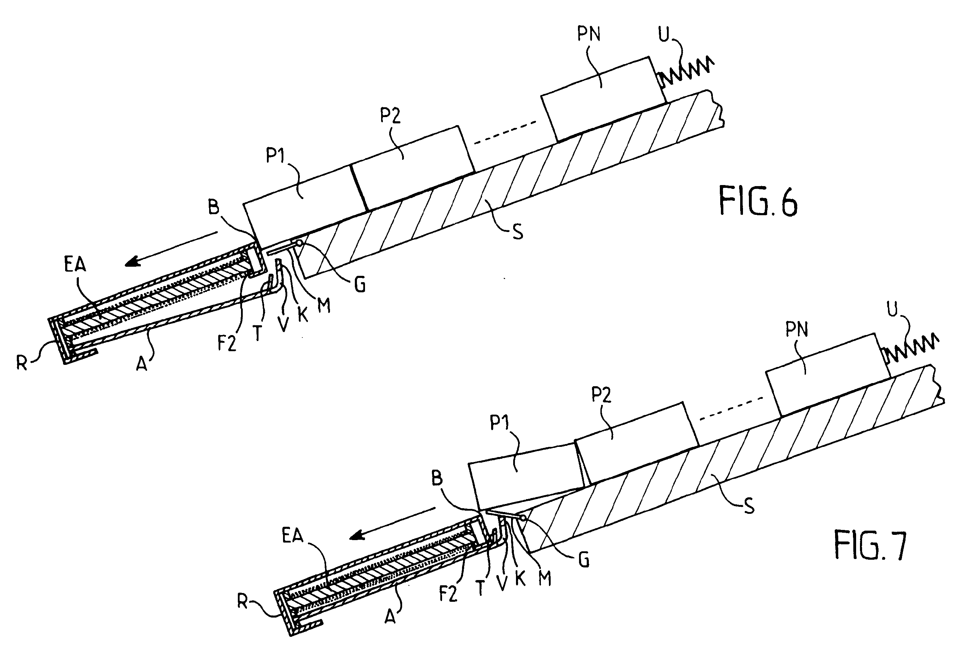

Dans la variante de réalisation représentée sur les figures 6 et 7 on a prévu, au niveau de la fente F, une petite plaque mobile M, articulée en G sur le support S.

Ainsi, la partie recourbée K de l'armature mobile A ne vient pas frapper directement l'objet P1 à éjecter, mais la plaque mobile M qui, en pivotant autour de son axe G, provoque l'éjection de l'objet, comme illustré sur la figure 7. Cette disposition permet d'éjecter plus facilement des objets dont les formes ne sont pas régulières et qui ne sont en particulier pas constituées par des boîtes.

Par ailleurs, on pourra, le cas échéant, rajouter au niveau de l'évidement V de l'armature mobile A une petite plaque métallique T dirigée vers le haut afin de réduire l'écartement (entrefer) avec la culasse C au niveau du flasque F2. Lors de l'actionnement de l'électroaimant EA, la vitesse angulaire de l'armature mobile A se trouve ainsi augmentée, ce qui permet d'accroître la puissance en fin de course et donc la force de frappe qui se trouve pratiquement doublée.

## Revendications

1. Dispositif pour extraire automatiquement et de manière séquentielle des objets (P1,P2...PN) stockés en rangées dans des rayonnages (S), le premier objet (P1) de chaque rangée étant maintenu en appui contre une butée (B), **caractérisé en ce qu'**il comprend au moins un électroaimant (EA) dont l'armature mobile (A) vient frapper l'objet en butée (P1) à travers une fente (F) afin de le faire passer par-dessus la butée (B).

2. Dispositif d'extraction selon la revendication 1, **caractérisé en ce que** l'électroaimant (EA) comporte une culasse (C) constituée par un noyau ferromagnétique (N) supportant un bobinage (L) et pourvu à chacune de ses extrémités d'un flasque (F1,F2), tandis que l'armature mobile (A) comporte, à l'une de ses extrémités, des ergots (E) venant s'emboîter librement avec un certain jeu dans des ouvertures correspondantes (O) de l'un des flasques (F1), et à son autre extrémité, une partie recourbée (K) s'étendant au-delà de l'autre flasque (F2) et qui, lorsque l'armature mobile (A) est attirée par la culasse (C) sous l'effet du courant circulant dans le bobinage (L), vient faire saillie à travers ladite fente (F) pour frapper l'objet à extraire (P1).

3. Dispositif d'extraction selon la revendication 2, **caractérisé en ce que** le noyau (N) de la culasse (C) et l'armature mobile (A) sont constitués par des plaques rectangulaires.

4. Dispositif d'extraction selon la revendication 2 ou 3, **caractérisé en ce qu'**en l'absence de courant dans le bobinage (L), l'armature mobile (A) est maintenue en position d'effacement sous l'effet de la simple gravité.

5. Dispositif d'extraction selon l'une quelconque des revendications 2 à 4 **caractérisé en ce que** l'électroaimant (EA) est logé dans un support en forme de rail (R) réalisé en un matériau amagnétique et constituant la butée (B) pour le premier objet (P1) de chaque rangée.

6. Dispositif d'extraction selon l'une quelconque des revendications 2 à 5, **caractérisé en ce que** la partie recourbée (K) de l'armature mobile (A) comporte un évidement (V).

7. Dispositif d'extraction selon la revendication 6, **caractérisé en ce que** l'armature mobile (A) comporte, au niveau de l'évidement (V) une plaque métallique (T) dirigée vers la culasse (C) et réduisant l'écartement avec celle-ci.

8. Dispositif d'extraction selon l'une quelconque des revendications 2 à 7, **caractérisé en ce que** le bobinage (L) de l'électroaimant (EA) est alimenté avec un courant modulable en intensité.

9. Dispositif d'extraction selon l'une quelconque des revendications 2 à 8, **caractérisé en ce que** l'extrémité recourbée (K) de l'armature mobile (A) est munie d'un amortisseur en caoutchouc (D).

10. Dispositif d'extraction selon la revendication 9, **caractérisé en ce qu'**un second amortisseur (D) est prévu sur l'armature mobile (A), au niveau de l'autre flasque (F2).

11. Dispositif d'extraction selon l'une quelconque des revendications 2 à 10, **caractérisé en ce qu'**une plaque pivotante (M) est disposée au niveau de la fente (F), entre l'objet à extraire (P1) et la partie recourbée (K) de l'armature mobile (A).

## Claims

1. Device for automatically and sequentially extracting objects (P1, P2 ... PN) stored in rows on shelving (S), the first object (P1) in each row being held in abutment against a stop, **characterised in that** it includes at least one electromagnet (EA), the moving armature (A) of which strikes the object in abutment (P1) through a slit (F) in order to cause it to pass over the stop (B).

2. Extracting device according to claim 1, **characterised in that** the electromagnet (EA) comprises a yoke (C) constituted by a ferromagnetic core (N) supporting a winding (L) and provided, at each of its ends, with a flange (F1, F2), while the moving armature (A) comprises, at one of its ends, lugs (E) that fit freely, with a certain amount of play, into corresponding openings (O) in one of the flanges (F1), and, at its other end, a bent back portion (K) extending beyond the other flange (F2) and which, when the moving armature (A) is attracted by the yoke (C) through the effect of the current flowing through the winding (L), projects through said slit (F) to strike the object to be extracted (P1).

3. Extracting device according to claim 2, **characterised in that** the core (N) of the yoke (C) and the moving armature (A) are constituted by rectangular plates.

4. Extracting device according to claim 2 or 3, **characterised in that** in the absence of current flow through the winding (L), the moving armature (A) is held in withdrawn position simply by the force of gravity.

5. Extracting device according to any one of claims 2 to 4, **characterised in that** the electromagnet (EA) is housed in a support in the form of a rail (R) made of a non-magnetic material and forming the stop (B) for the first object (P1) in each row.

6. Extracting device according to any one of claims 2 to 5, **characterised in that** the bent back portion (K) of the moving armature (A) comprises a cut-out portion (V).

7. Extracting device according to claim 6, **characterised in that** the moving armature (A) comprises, in the area of the cut-out portion (V), a metallic plate (T) directed towards the yoke (C) and reducing the spacing in relation thereto.

8. Extracting device according to any one of claims 2 to 7, **characterised in that** the winding (L) of the electromagnet (EA) is supplied with a current the strength of which can be modulated.

9. Extracting device according to any one of claims 2 to 8, **characterised in that** the bent back end (K) of the moving armature (A) is provided with a rubber shock absorber (D).

10. Extracting device according to claim 9, **characterised in that** a second schock absorber (D) is provided on the moving armature (A), in the area of the other flange (F2).

11. Extracting device according to any one of claims 2 to 10, **characterised in that** a pivoting plate (M) is disposed in the area of the slit (F), between the object to be extracted (P1) and the bent back portion (K) of the moving armature (A).

## Patentansprüche

1. Vorrichtung zum automatischen und sequenziellen Entnehmen von Gegenständen (P1, P2, ... PN), die in Reihen in Regalen (S) gelagert sind, wobei der erste Gegenstand (P1) jeder Reihe in Anlage an einem Anschlag (B) gehalten ist, **dadurch gekennzeichnet, dass** sie mindestens einen Elektromagneten (EA) umfasst, dessen beweglicher Anker (A) durch einen Schlitz (F) auf den am Anschlag befindlichen Gegenstand (P1) aufschlägt, um diesen den Anschlag (B) übertreten zu lassen.

2. Entnahmevorrichtung nach Anspruch 1, **dadurch gekennzeichnet, dass** der Elektromagnet (EA) ein Joch (C) umfasst, das aus einem ferromagnetischen Kern (N) gebildet ist, der eine Wicklung (L) lagert und an jedem seiner Enden mit einem Flansch (F1, F2) versehen ist, während der bewegliche Anker (A) an einem seiner Enden Ansätze (E), die sich frei mit einem gewissen Spiel in entsprechende Öffnungen (O) eines der Flansche (F1) einfügen, und an seinem anderen Ende einen zurückgebogenen Abschnitt (K) umfasst, der sich über den anderen Flansch (F2) hinaus erstreckt, und der, wenn der bewegliche Anker (A) unter der Einwirkung des in der Wicklung (L) fließenden Stroms vom Joch (C) angezogen wird, durch den Spalt (F) hindurch vorspringt, um auf den zu entnehmenden Gegenstand (P1) aufzuschlagen.

3. Entnahmevorrichtung nach Anspruch 2, **dadurch gekennzeichnet, dass** der Kern (N) des Jochs (C) und der bewegliche Anker (A) aus rechteckigen Platten gebildet sind.

4. Entnahmevorrichtung nach Anspruch 2 oder 3, **dadurch gekennzeichnet, dass** bei Abwesenheit von Strom in der Wicklung (L) der bewegliche Anker (A) unter der Einwirkung einfacher Schwerkraft in einer zurückgezogenen Stellung gehalten ist.

5. Entnahmevorrichtung nach einem der Ansprüche 2 bis 4, **dadurch gekennzeichnet, dass** der Elektromagnet (EA) in einer schienenförmigen Halterung (R) untergebracht ist, die aus einem nicht magnetischen Material hergestellt ist und den Anschlag (B) für den ersten Gegenstand (P1) jeder Reihe bildet.

6. Entnahmevorrichtung nach einem der Ansprüche 2 bis 5, **dadurch gekennzeichnet, dass** der zurückgebogene Abschnitt (K) des beweglichen Ankers (A) eine Ausnehmung (V) aufweist.

7. Entnahmevorrichtung nach Anspruch 6, **dadurch gekennzeichnet, dass** der bewegliche Anker (A) im Bereich der Ausnehmung (V) eine metallisch Platte (T) aufweist, die zum Joch (C) hin gerichtet ist und den Abstand zu diesem verkleinert.

8. Entnahmevorrichtung nach einem der Ansprüche 2 bis 7, **dadurch gekennzeichnet, dass** die Wicklung (L) des Elektromagneten (EA) mit einem in der Stärke modulierbaren Strom gespeist wird.

9. Entnahmevorrichtung nach einem der Ansprüche 2 bis 8, **dadurch gekennzeichnet, dass** das zurückgebogene Ende (K) des beweglichen Ankers (A) mit einem Gummistoßdämpfer (D) ausgestattet ist.

10. Entnahmevorrichtung nach Anspruch 9, **dadurch gekennzeichnet, dass** ein zweiter Stoßdämpfer (D) im Bereich des anderen Flanschs (F2) am beweglichen Anker (A) vorgesehen ist.

11. Entnahmevorrichtung nach einem der Ansprüche 2 bis 10, **dadurch gekennzeichnet, dass** eine Schwenkplatte (M) im Bereich des Schlitzes (F) zwischen dem zu entnehmenden Gegenstand (P1) und dem zurückgebogenen Abschnitt (K) des beweglichen Ankers (A) angeordnet ist.
